# EUROPEAN PATENT APPLICATION

(11) **EP 4 325 957 A1**
(43) Date of publication of application: **21.02.2024**
(21) Application number: 21936457.7
(22) Date of filing: 16.04.2021
(51) Int. Cl.: H04W 72/00

(54) **COMMUNICATION METHOD AND APPARATUS APPLYING UNLICENSED SPECTRUM**

(71) Applicant: Huawei Technologies Co., Ltd., Shenzhen, Guangdong 518129 (CN)
(72) Inventor: GAO, Lei, Shenzhen, Guangdong 518129 (CN); WU, Qian, Shenzhen, Guangdong 518129 (CN); YU, Zhan, Shenzhen, Guangdong 518129 (CN)
(74) Representative: Huawei European IPR
(86) International application number: PCT/CN2021/087765
(87) International publication number: WO 2022/217581

(57) **Abstract**

This application relates to a communication method and apparatus using an unlicensed spectrum, applied to the field of short-range communication, and in particular, to scenarios such as smart driving, smart home, and intelligent manufacturing. The method includes: generating broadcast information; and sending the broadcast information on at least one broadcast channel on a predefined frequency band, where the at least one broadcast channel includes a first broadcast channel, and a center frequency of the first broadcast channel is 2403 MHz, 2404 MHz, 2420 MHz, 2421 MHz, 2422 MHz, 2423 MHz, 2424 MHz, or 2481 MHz. According to a broadcast channel configuration manner in this solution, signal interference on the unlicensed spectrum can be reduced, and communication quality can be improved.

## Description

### TECHNICAL FIELD

This application relates to the field of communication technologies, and in particular, to a communication method and apparatus using an unlicensed spectrum.

### BACKGROUND

An existing 2.4 GHz frequency band is an unlicensed (unlicensed) frequency band, and technologies such as wireless fidelity (wireless fidelity, Wi-Fi) and Bluetooth (Bluetooth) may be applied on the frequency band.

If another communication technology is applied on the frequency band, how to deploy, on the frequency band, a channel in the communication technology is a problem that needs to be resolved.

### SUMMARY

Embodiments of this application provide a communication method and apparatus using an unlicensed spectrum, to provide a manner of deploying a broadcast channel on an unlicensed frequency band.

According to a first aspect, a communication method is provided. The method may be performed by a first communication apparatus. The first communication apparatus may be a communication device or a communication apparatus, for example, a chip system, that can support the communication device in implementing a function required in the method. For example, the first communication apparatus may be a vehicle-mounted apparatus, or may be a non-vehicle-mounted apparatus. Optionally, the first communication apparatus is, for example, a smart home device, an intelligent manufacturing device, or an intelligent transportation device, such as a vehicle, an unmanned aerial vehicle, an unmanned transport vehicle, a car, a vehicle, or a robot. The method includes: generating broadcast information; and sending the broadcast information on at least one broadcast channel on a predefined frequency band, where the at least one broadcast channel includes a first broadcast channel, and a center frequency of the first broadcast channel is 2403 MHz, 2404 MHz, 2420 MHz, 2421 MHz, 2422 MHz, 2423 MHz, 2424 MHz, or 2481 MHz.

In this embodiment of this application, the predefined frequency band includes the at least one broadcast channel, and the center frequency of the first broadcast channel is 2403 MHz, 2404 MHz, 2420 MHz, 2421 MHz, 2422 MHz, 2423 MHz, 2424 MHz, or 2481 MHz. 2403 MHz, 2404 MHz, and 2481 MHz may be considered to be located in an edge area of the predefined frequency band. For example, in addition to a broadcast channel, another channel, for example, a data channel, is deployed on the predefined frequency band. Because the broadcast channel is located at the edge of the predefined frequency band, the broadcast channel is interfered with only by a data channel from one side. Compared with a case in which the broadcast channel is interfered with by a data channel from two sides, in this embodiment of this application, the broadcast channel is less interfered with by the data channel in this deployment. In addition, a Wi-Fi channel does not cover these frequencies, and a congested broadcast channel in a Bluetooth technology does not use these frequencies. Therefore, interference caused by using these frequencies is small. In addition, a general channel (a data channel) in the Bluetooth technology is generally idle. Therefore, although data channels in the Bluetooth technology cover these frequencies (except 2481 MHz), interference is small. For the frequency 2481 MHz, both the Wi-Fi channel and the channel in the Bluetooth technology are not covered. It can be learned that in this embodiment of this application, interference between channels of different communication technologies can be reduced by using these frequencies. Although 2420 MHz to 2424 MHz are not located at the edge of the predefined frequency band, the channel in the Bluetooth technology does not cover these frequencies. Although a Wi-Fi channel 2, a Wi-Fi channel 3, or a Wi-Fi channel 4 may cover a part of or all of these frequencies, the Wi-Fi channel 2, the Wi-Fi channel 3, and the Wi-Fi channel 4 are channels with low utilization and are generally seldom used. Therefore, a center frequency of the broadcast channel is deployed as one of these frequencies, and relatively, interference is small, or a probability of causing interference is small.

In a possible implementation, the center frequency of the first broadcast channel belongs to a first set, and the first set includes one or more of the following: at least one of 2403 MHz or 2404 MHz, at least one of 2420 MHz, 2421 MHz, 2422 MHz, 2423 MHz, or 2424 MHz, or 2481 MHz. It may be understood that the frequencies such as 2403 MHz, 2404 MHz, 2420 MHz, 2421 MHz, 2422 MHz, 2423 MHz, 2424 MHz, and 2481 MHz are divided into three parts based on frequency domain locations. 2403 MHz and 2404 MHz belong to a first part, 2420 MHz, 2421 MHz, 2422 MHz, 2423 MHz, or 2424 MHz belongs to a second part, and 2481 MHz belongs to a third part. If center frequencies of two broadcast channels need to be selected, two frequencies may be respectively selected from any two of the three parts as the center frequencies of the two broadcast channels. Because a distance between any two of the three parts is long in frequency domain, different broadcast channels selected in this manner can implement an effect of frequency domain diversity. In addition, independence of a broadcast channel determined in this way is strong, and a probability that different broadcast channels are simultaneously interfered with is low. In addition, because a frequency domain interval between different broadcast channels selected in this manner is large, frequency selective fading features of the different broadcast channels are independent, and a probability that the different broadcast channels are simultaneously located in a frequency deep fading region is low, so that transmission quality of the broadcast information can be improved. In addition, because the frequency domain interval between different broadcast channels selected in this manner is large, interference caused by frequency leakage between the different broadcast channels is also small.

In a possible implementation, the at least one broadcast channel further includes a second broadcast channel, a center frequency of the second broadcast channel belongs to the first set, and the center frequency of the second broadcast channel is different from the center frequency of the first broadcast channel. A quantity of the at least one broadcast channel may be greater than or equal to 1. If the quantity of the at least one broadcast channel is equal to 1, the broadcast channel is the first broadcast channel. If the quantity of the at least one broadcast channel is greater than 1, it indicates that the at least one broadcast channel may include another broadcast channel in addition to including the first broadcast channel, for example, further include the second broadcast channel. A center frequency of another broadcast channel included in the at least one broadcast channel is not limited. For example, the center frequency of the second broadcast channel is also one of 2403 MHz, 2404 MHz, 2420 MHz, 2421 MHz, 2422 MHz, 2423 MHz, 2424 MHz, or 2481 MHz, or the center frequency of the second broadcast channel is not limited to one of these frequencies, for example, is another frequency other than these frequencies on the predefined frequency band.

In a possible implementation, the predefined frequency band includes at least one available center frequency, a center frequency with a lowest frequency in the at least one available center frequency is 2403 MHz or 2404 MHz, a center frequency with a highest frequency in the at least one available center frequency is 2481 MHz, and the at least one available center frequency is a center frequency of a broadcast channel and/or a data channel. That is, the center frequency of the broadcast channel specifies a frequency range for the at least one available center frequency, and another center frequency in the at least one available center frequency is within the range. The center frequency of the broadcast channel is used to specify the frequency range for the at least one available center frequency, so that a frequency domain interval between broadcast channels is as large as possible, and a diversity effect between the broadcast channels is better. Because the center frequency of the broadcast channel may be located at the edge of the predefined frequency band, these broadcast channels are interfered with only by a data channel from one side. Compared with a case in which the broadcast channels are interfered with by data channels from two sides, in this embodiment of this application, the broadcast channels are less interfered with by the data channel in this deployment. In addition, to reduce interference from the data channel to the broadcast channel, a frequency domain interval between the data channels may be greater than a frequency domain interval between the data channel and the broadcast channel, and the broadcast channel of which center frequency is located at the edge of the predefined frequency band only needs to reserve the foregoing larger frequency domain interval on one side, so that overheads caused by the foregoing frequency domain interval are less.

In a possible implementation, on the predefined frequency band, a frequency interval between center frequencies of two data channels that are adjacent in frequency is less than or equal to a frequency interval between center frequencies of a data channel and a broadcast channel that are adjacent in frequency. A bandwidth of the data channel is considered, to reduce interference between the data channel and the broadcast channel, a frequency domain distance between the center frequency of the data channel and the center frequency of the broadcast channel may be set based on a maximum bandwidth of the data channel. For example, a frequency domain distance between center frequencies of the data channel and the broadcast channel that are adjacent in frequency domain may be greater than or equal to the maximum bandwidth of the data channel. However, the data channel may not be set to the maximum bandwidth. Therefore, a frequency domain distance between two data channels that are adjacent in frequency domain is not necessarily considered based on the maximum bandwidth of the data channel. For example, the frequency domain distance between center frequencies of two data channels that are adjacent in frequency domain may be less than or equal to the maximum bandwidth of the data channel. Therefore, the frequency interval between center frequencies of two data channels that are adjacent in frequency may be less than or equal to the frequency interval between center frequencies of a data channel and a broadcast channel that are adjacent in frequency. In this manner, interference between the data channel and the broadcast channel can be reduced, and an interval between the data channels may be small. This not only helps reduce interference between the data channels, but also improves frequency domain resource utilization.

In a possible implementation, a symbol rate of the first broadcast channel is a divisor of 1 MHz.

In a possible implementation, the symbol rate of the first broadcast channel is 1 MHz, 500 kHz, 250 kHz, 125 kHz, 200 kHz, or 100 kHz.

If a symbol rate of a broadcast channel is low, a bandwidth of the broadcast channel is also low, so that deployment of the broadcast channel is more flexible. In addition, a lower symbol rate enables each symbol to have longer transmission time period. Therefore, at a same transmit power, each symbol has greater transmit energy, and a coverage capability of the broadcast channel is stronger.

In a possible implementation, the broadcast information indicates whether connection can be performed and/or whether discovery can be performed. If the broadcast type indicates that connection can be performed, a communication apparatus (for example, the second communication apparatus) receiving the broadcast information may establish, based on the broadcast information or extended broadcast information indicated by the broadcast information, a connection to a communication apparatus (for example, the first communication apparatus) sending the broadcast information. If the broadcast type indicates that connection cannot be performed, the communication apparatus receiving the broadcast information may not establish, based on the broadcast information or the extended broadcast information indicated by the broadcast information, a connection to the communication apparatus sending the broadcast information. If the broadcast type indicates that discovery can be performed, the communication apparatus (for example, the second communication apparatus) receiving the broadcast information may be discovered, based on the broadcast information or the extended broadcast information indicated by the broadcast information, by the communication apparatus (for example, the first communication apparatus) sending the broadcast information. If the broadcast type indicates that discovery cannot be performed, the communication apparatus receiving the broadcast information may not be discovered, based on the broadcast information or the extended broadcast information indicated by the broadcast information, by the communication apparatus sending the broadcast information.

According to a second aspect, another communication method is provided. The method may be performed by a second communication apparatus. The second communication apparatus may be a communication device or a communication apparatus, for example, a chip system, that can support the communication device in implementing a function required in the method. For example, the second communication apparatus may be a vehicle-mounted apparatus, or may be a non-vehicle-mounted apparatus. Optionally, the second communication apparatus is, for example, a smart home device, an intelligent manufacturing device, or an intelligent transportation device, such as a vehicle, an unmanned aerial vehicle, an unmanned transport vehicle, a car, a vehicle, or a robot. The method includes: performing detection on at least one broadcast channel on a predefined frequency band; and receiving broadcast information on a first broadcast channel included in the at least one broadcast channel, where a center frequency of the first broadcast channel is 2403 MHz, 2404 MHz, 2420 MHz, 2421 MHz, 2422 MHz, 2423 MHz, 2424 MHz, or 2481 MHz.

In a possible implementation, the center frequency of the first broadcast channel belongs to a first set, and the first set includes one or more of the following: at least one of 2403 MHz or 2404 MHz, at least one of 2420 MHz, 2421 MHz, 2422 MHz, 2423 MHz, or 2424 MHz, or 2481 MHz.

In a possible implementation, the at least one broadcast channel further includes a second broadcast channel, a center frequency of the second broadcast channel belongs to the first set, and the center frequency of the second broadcast channel is different from the center frequency of the first broadcast channel.

In a possible implementation, the predefined frequency band includes at least one available center frequency, a center frequency with a lowest frequency in the at least one available center frequency is 2403 MHz or 2404 MHz, a center frequency with a highest frequency in the at least one available center frequency is 2481 MHz, and the at least one available center frequency is a center frequency of a broadcast channel and/or a data channel.

In a possible implementation, on the predefined frequency band, a frequency interval between center frequencies of two data channels that are adjacent in frequency is less than or equal to a frequency interval between center frequencies of a data channel and a broadcast channel that are adjacent in frequency.

In a possible implementation, a symbol rate of the first broadcast channel is a divisor of 1 MHz.

In a possible implementation, the symbol rate of the first broadcast channel is 1 MHz, 500 kHz, 250 kHz, 125 kHz, 200 kHz, or 100 kHz.

In a possible implementation, the broadcast information indicates a status of a node sending the broadcast information.

For technical effects brought by the second aspect or the possible implementations, refer to the descriptions of the technical effects brought by the first aspect or the corresponding implementations.

According to a third aspect, a communication apparatus is provided. The communication apparatus is, for example, the first communication apparatus according to the first aspect or the second aspect. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, and the functional module is referred to as the transceiver unit. The functional module can implement the sending function and the receiving function. Alternatively, the sending unit and the receiving unit may be different functional modules, and the transceiver unit is a general term for these functional modules.

The processing unit is configured to generate broadcast information.

The transceiver unit (or the sending unit) is configured to send the broadcast information on at least one broadcast channel on a predefined frequency band, where the at least one broadcast channel includes a first broadcast channel, and a center frequency of the first broadcast channel is 2403 MHz, 2404 MHz, 2420 MHz, 2421 MHz, 2422 MHz, 2423 MHz, 2424 MHz, or 2481 MHz.

For another example, the communication apparatus includes a processor. The processor is coupled to a memory, and is configured to execute instructions in the memory, to implement the method performed by the first communication apparatus according to the first aspect or the second aspect. Optionally, the communication apparatus further includes another component, for example, an antenna, an input/output module, and an interface. These components may be hardware, software, or a combination of software and hardware.

According to a fourth aspect, a communication apparatus is provided. The communication apparatus may be the second communication apparatus according to the first aspect or the second aspect. The communication apparatus is, for example, a base station, or a baseband apparatus in the base station. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the related descriptions in the third aspect.

The transceiver unit (or the receiving unit) is configured to perform detection on at least one broadcast channel on a predefined frequency band (or the processing unit is configured to perform detection on the at least one broadcast channel on a predefined frequency band).

The transceiver unit (or the receiving unit) is further configured to receive broadcast information on a first broadcast channel included in the at least one broadcast channel, where a center frequency of the first broadcast channel is 2403 MHz, 2404 MHz, 2420 MHz, 2421 MHz, 2422 MHz, 2423 MHz, 2424 MHz, or 2481 MHz.

For another example, the communication apparatus includes a processor. The processor is coupled to a memory, and is configured to execute instructions in the memory, to implement the method performed by the second communication apparatus according to the first aspect or the second aspect. Optionally, the communication apparatus further includes another component, for example, an antenna, an input/output module, and an interface. These components may be hardware, software, or a combination of software and hardware.

According to a fifth aspect, a computer-readable storage medium is provided. The computer-readable storage medium is configured to store a computer program or instructions, and when the computer program or the instructions is/are run, the method performed by the first communication apparatus or the second communication apparatus in the foregoing aspects is implemented.

According to a sixth aspect, a computer program product including instructions is provided. When the computer program product is run on a computer, the methods according to the foregoing aspects are implemented.

A broadcast channel set in the manner provided in this embodiment of this application has a low probability of generating interference, and communication quality is good.

### BRIEF DESCRIPTION OF DRAWINGS

FIG. 1A is a schematic diagram of an application scenario according to an embodiment of this application;
FIG. 1B is a schematic diagram of another application scenario according to an embodiment of this application;
FIG. 2 is a flowchart of a communication method according to an embodiment of this application;
FIG. 3 is a schematic diagram of a structure of an apparatus according to an embodiment of this application; and
FIG. 4 is a schematic diagram of another structure of an apparatus according to an embodiment of this application.

### DESCRIPTION OF EMBODIMENTS

In the specification, claims, and accompanying drawings of embodiments of this application, the terms "first", "second", "third", "fourth", and so on (if existent) are intended to distinguish between similar objects but do not necessarily indicate a specific order or sequence. It should be understood that the data used in such a way are interchangeable in proper circumstances so that embodiments of this application described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

For example, a communication apparatus in embodiments of this application may be a terminal device, a circuit system (for example, a chip system) that can complete a function of the terminal device, or a large device including the terminal device. For example, the terminal device may include a cockpit domain (cockpit domain) device, or include a module in a cockpit domain device, for example, one or more of modules such as a cockpit domain controller (cockpit domain controller, CDC), a camera, a screen, a microphone, a speaker, an electronic key, and a passive entry passive start controller. For another example, the terminal device may further include a data transfer device, such as a router, a repeater, a bridge, or a switch. For another example, the terminal device may further include various types of user equipments (user equipment, UE), mobile phones (mobile phone), tablet computers (pad), desktop computers, headsets, speakers, and the like. For another example, the terminal device may further include a machine intelligence device, such as a self-driving (self-driving) device, a transportation safety (transportation safety) device, a virtual reality (virtual reality, VR) terminal device, an augmented reality (augmented reality, AR) terminal device, a machine type communication (machine type communication, MTC) device, an industrial control (industrial control) device, a remote medical (remote medical) device, a smart grid (smart grid) device, a smart city (smart city) device, a wearable device (such as a smart watch, a smart band, or a pedometer), or a smart home device.

The following describes some terms in embodiments of this application, to facilitate understanding of a person skilled in the art.
(1) CDC: The CDC is short for a head unit. In addition to conventional radio, music time-frequency playback, and navigation functions, a current head unit has cellular communication functions (3G, 4G, and the like), and can implement information communication between a human and a vehicle and between the vehicle and the outside world by using a controller area network (controller area network, CAN)-bus (BUS) technology of the vehicle. This enhances user experience, services, and safety-related functions.
(2) Master node and slave node: Two types of nodes are logically classified into the master node and the slave node. The master node manages the slave node, has a resource allocation function, and is responsible for allocating resources to the slave node. The slave node communicates based on scheduling of the master node by using the resources allocated by the master node. The nodes may be various apparatuses. For example, the master node is a mobile phone, and the slave node is a headset. The mobile phone establishes a communication connection to the headset to implement data exchange. The mobile phone manages the headset. The mobile phone has a resource allocation function, and may allocate resources to the headset.
(3) Communication domain: The communication domain is a system including a group of communication nodes that have a communication relationship and a communication connection relationship between the communication nodes. One apparatus or device may be in a plurality of communication domains. For example, when a mobile phone performs wireless communication with a headset, the mobile phone is in a communication domain a including the mobile phone and the headset. In the communication domain a, the mobile phone is a master node, and the headset is a slave node. Then, after the mobile phone detects a CDC and establishes a wireless connection to the CDC, the mobile phone is also in a communication domain b including the mobile phone and the CDC. In the communication domain b, the CDC is a master node, the mobile phone is a slave node, and the mobile phone follows scheduling of the CDC. The communication domain b may further include another slave node such as a vehicle-mounted sound box or a microphone.
(4) Terms: The terms "system" and "network" may be used interchangeably in embodiments of this application. "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. A character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, and are not intended to limit sizes, content, an order, a time sequence, priorities, importance degrees, or the like of the plurality of objects. For example, a first broadcast channel and a second broadcast channel are merely names given for ease of description, and the two broadcast channels may be a same broadcast channel, or may be different broadcast channels. Names such as "first" and "second" are not used to indicate different bandwidths, time-frequency domain locations, carried content, priorities, importance degrees, or the like of the two broadcast channels.

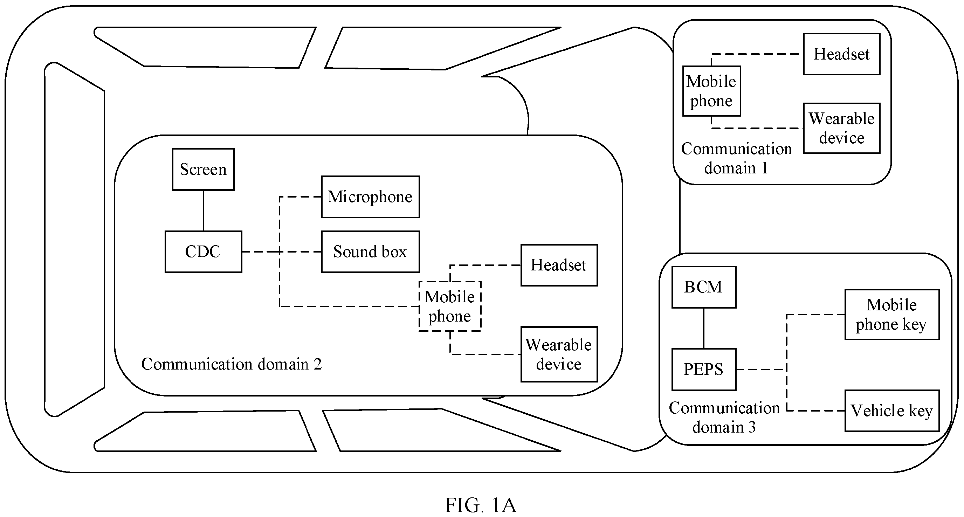

Generally, a topology relationship of in-vehicle communication links is shown in FIG. 1A. FIG. 1A may also be used as an application scenario of this embodiment of this application. It can be learned from FIG. 1A that there are a plurality of communication domains in a vehicle. One communication domain includes one master node and at least one slave node. The master node schedules the slave node, so that the master node and the slave node transmit service data to each other. For example, in FIG. 1A, a mobile phone, a headset, and a wearable device belong to a communication domain, for example, referred to as a communication domain 1, where the mobile phone is a master node, and the headset and the wearable device are slave nodes; a cockpit domain controller (cockpit domain controller, CDC), a display, a microphone, and a sound box belong to a communication domain, for example, referred to as a communication domain 2, where the CDC is a master node, and the display, the microphone, and the sound box are slave nodes; and a passive entry passive start (passive entry passive start, PEPS) system, a body control module (body control module, BCM), a mobile phone key, and a vehicle key belong to a communication domain, for example, referred to as a communication domain 3, where the PEPS system is a master node, and the BCM, the mobile phone key, and vehicle key are slave nodes. In addition, a master node in a communication domain may also be used as a slave node in another communication domain. For example, the mobile phone in the communication domain 1 may be used as a slave node in the communication domain 2. Alternatively, the communication domain may be defined from a perspective of a resource. For example, a resource that is allocated by a node and that is used by the node to communicate with another node may be referred to as a communication domain. In this case, the node is a master node in the communication domain, and the another node that communicates with the node by using the communication domain (resource) is a slave node in the communication domain.

A communication method provided in embodiments of this application may be applied to short-range wireless communication. For example, a short-range wireless communication technology may be used for at least one broadcast channel and/or data channel that are/is to be involved in the following in embodiments of this application. A wireless communication scenario in technical solutions provided in embodiments of this application may include an in-vehicle wireless communication scenario, for example, communication between a CDC and a vehicle-mounted sound box, a vehicle-mounted microphone, or a mobile phone, and communication between a mobile phone and a wearable device such as a headset. Alternatively, the wireless communication scenario may include wireless local area communication, for example, communication between a plurality of access points (access point, AP) and a plurality of stations (station). For example, the method provided in embodiments of this application may be applied to a short-range communication process on an unlicensed frequency band.

Optionally, the method provided in embodiments of this application may be an improvement made on a conventional communication technology. In other words, a communication system to which embodiments of this application are applied may be a conventional communication system. The communication system is, for example, a short-range communication system, such as a Bluetooth system, or the communication system may be another conventional short-range communication system. Alternatively, the method provided in embodiments of this application may be used to perform some basic definitions on a communication system applied on the unlicensed frequency band. The communication system to which embodiments of this application are applied may not be a conventional communication system, but a newly defined communication system on the unlicensed frequency band.

For example, if the technical solutions provided in embodiments of this application are applied to the in-vehicle wireless communication scenario, a network architecture shown in FIG. 1A may be a network architecture to which embodiments of this application are applied. If the technical solutions provided in embodiments of this application are applied to another wireless local area communication scenario, the network architecture to which embodiments of this application are applied may change accordingly.

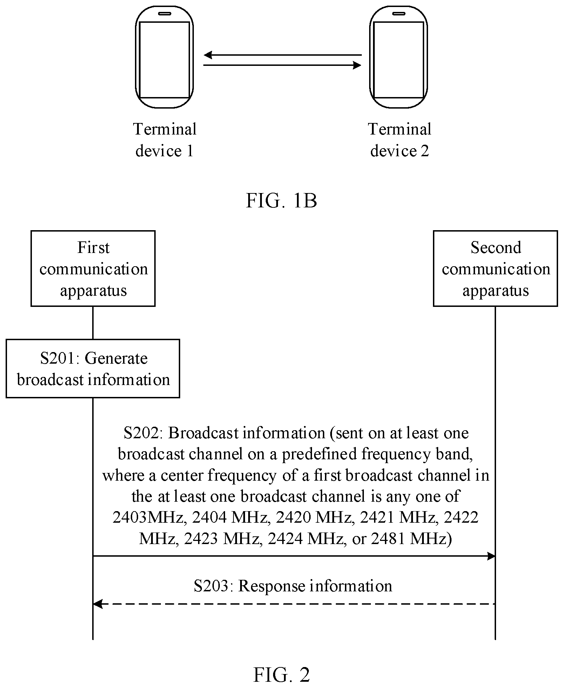

For another example, if the technical solutions provided in embodiments of this application are applied to a vehicle to everything (vehicle to everything, V2X) communication scenario, FIG. 1B is an application scenario according to an embodiment of this application. FIG. 1B includes a terminal device 1 and a terminal device 2. The terminal device 1 and the terminal device 2 may communicate with each other through a sidelink (sidelink, SL). In FIG. 1B, for example, the terminal device is a mobile phone. The terminal device in embodiments of this application is not limited thereto.

The following describes the communication method provided in embodiments of this application with reference to the accompanying drawings. For ease of description, an example in which the method is performed by a first communication apparatus and a second communication apparatus is used in the following description. If embodiments of this application are applied to the network architecture shown in FIG. 1A, the technical solutions provided in embodiments of this application may be applied to communication between two nodes in a communication domain in the vehicle. For example, the first communication apparatus described below may be a master node in any communication domain shown in FIG. 1A. For example, if the communication domain is the communication domain 2, the first communication apparatus is the CDC in the communication domain 2. The second communication apparatus described below may be a slave node in a communication domain shown in FIG. 1A, and the communication domain is also a communication domain to which the first communication apparatus belongs. For example, if the communication domain is the communication domain 2, the second communication apparatus is, for example, the microphone, the mobile phone, or the sound box in the communication domain 2. Alternatively, the second communication apparatus described below may be a master node in any communication domain shown in FIG. 1A. For example, if the communication domain is the communication domain 2, the second communication apparatus is the CDC in the communication domain 2. The first communication apparatus described below may be a slave node in a communication domain shown in FIG. 1A, and the communication domain is also a communication domain to which the second communication apparatus belongs. For example, if the communication domain is the communication domain 2, the first communication apparatus is, for example, the microphone, the mobile phone, or the sound box in the communication domain 2. Alternatively, the first communication apparatus described below may be a slave node in any communication domain shown in FIG. 1A. For example, if the communication domain is the communication domain 2, the second communication apparatus is, for example, the microphone, the mobile phone, or the sound box in the communication domain 2. The second communication apparatus described below may also be a slave node in a communication domain shown in FIG. 1A, and the communication domain is also a communication domain to which the first communication apparatus belongs. For example, if the communication domain is the communication domain 2, the second communication apparatus is, for example, the microphone, the mobile phone, or the sound box in the communication domain 2, and the first communication apparatus and the second communication apparatus are different slave nodes.

Alternatively, if embodiments of this application is applied to the network architecture shown in FIG. 1B, the first communication apparatus described below may be the terminal device 1 shown in FIG. 1B, and the second communication apparatus may be the terminal device 2 shown in FIG. 1B.

An embodiment of this application provides a communication method. FIG. 2 is a flowchart of the method.

S201: A first communication apparatus generates broadcast information.

The broadcast information may be used for discovery, connection, public data transfer (or transmission), or the like. The public data transfer is transmission that is not encrypted, has a unidirectional transmission direction, and has no reliability assurance in a transmission process. A receiver can be specified or not be specified during the public data transfer. Information (for example, broadcast information) sent to implement a function of the discovery, connection, or public data transfer, for example, includes device capability information, service information provided by a device, device type information, and unidirectional broadcast application layer public information (for example, a commercial advertisement and/or weather information). The broadcast information is periodically sent on a broadcast channel based on a broadcast interval.

In this embodiment of this application, the broadcast information needs to be sent by using the broadcast channel. Optionally, in addition to sending the broadcast information on the broadcast channel, a communication apparatus (for example, the first communication apparatus) sending the broadcast information may further send extended broadcast information on a data channel. For example, information that needs to be sent by a transmit end at specific time and that is used to implement the function of the discovery, connection, or public data transfer is considered as a whole, and a part of the information in the whole may be sent by using the broadcast information, and a remaining part of the information in the whole may be sent by using the extended broadcast information. If the broadcast information corresponds to the extended broadcast information, subsequent interaction that may exist in a procedure of the discovery, connection, or public data transfer may also be completed on the data channel, to reduce information sent on the broadcast channel and reduce a congestion degree of the broadcast channel. If the broadcast information does not correspond to the extended broadcast information, subsequent interaction that may exist in a procedure of the discovery, connection, or public data transfer may continue to be completed on the broadcast channel.

Therefore, in this embodiment of this application, the broadcast channel may be used to send the broadcast information. Optionally, the broadcast channel may be further used to send first type of information, and information other than the broadcast information and the first type of information is not sent by using the broadcast channel. The first type of information includes information that is involved in a subsequent interaction process and that may exist after the broadcast information in the procedure of discovery, connection, or public data transfer. For example, the first communication apparatus sends the broadcast information to a second communication apparatus by using the broadcast channel, where the broadcast information is used for the discovery, connection, or public data transfer, and the broadcast information does not correspond to the extended broadcast information. If there is a further interaction process between the first communication apparatus and the second communication apparatus in the procedure of discovery, connection, or public data transfer, information involved in the interaction process after the broadcast information may continue to be transmitted by using the broadcast channel.

In addition, it should be noted that, based on a broadcast procedure (a process of sending the extended broadcast information may be considered as a process included in the broadcast procedure, or may be considered as a process that is not included in the broadcast procedure, for example, considered as a further interaction procedure based on the broadcast procedure). If further interaction is performed between communication apparatuses, a function such as discovery, access, or connectionless data transfer may be further implemented. Connectionless data transfer is performed before two communication apparatuses establish a communication connection, and may meet one or more of the following features: being encrypted, having a reliability assurance, or performing bidirectional transmission in a transmission process.

The following briefly describes some relationships and differences between the broadcast information and the extended broadcast information.
1. The broadcast information is sent on the broadcast channel, and the extended broadcast information is sent on the data channel. For descriptions of the broadcast channel, refer to the foregoing description. The data channel is a channel shared by various types of information other than information sent by using the broadcast channel. The various types of information described herein includes, for example, one or more of data, control signaling, or the extended broadcast information, and may further include information other than information sent by using the broadcast channel. For example, the "data channel" may also be referred to as a "common channel", or may have another name. It may be understood that the data channel is not dedicated to sending data, and the control signaling and the like may also be sent by using the data channel.
2. The broadcast information is a first message sent, to implement a function of discovery, connection, non-public data transfer, or public data sending, by the communication apparatus sending the broadcast information, and the extended broadcast message is a second message optionally sent, to implement the function of discovery, connection, non-public data transfer, or public data sending, by the communication apparatus sending the broadcast information. Optionally, sending time of the first message may be earlier than sending time of the second message.
3. One piece of extended broadcast information corresponds to at least one piece of broadcast information, and one piece of broadcast information may correspond to the extended broadcast information, or may not correspond to the extended broadcast information. It may be understood that the extended broadcast information is sent optionally rather than necessarily. That one piece of extended broadcast information corresponds to one piece of broadcast information means that information sent to implement the function of discovery, connection, non-public data transfer, or public data sending is sent by using the broadcast information and the extended broadcast information. For example, the broadcast information and the extended broadcast information each include a part of to-be-sent information, or some information in the to-be-sent information may be included in both the broadcast information and the extended broadcast information, to improve a sending success rate.
   For the to-be-sent information, which content in the information is specifically placed in the broadcast information and which content in the information is specifically placed in the extended broadcast information are not limited in this embodiment of this application. For example, content carried in the broadcast information and the extended broadcast information may be specified according to a protocol. For another example, content carried in the broadcast information and the extended broadcast information may be determined by the transmit end. For example, if the first communication apparatus is the transmit end, this may be determined by the first communication apparatus. For example, if an amount of information of the to-be-sent information is large, the first communication apparatus may divide the to-be-sent information into two parts, and the two parts are respectively carried in the broadcast information and the extended broadcast information, to reduce an amount of information carried on the broadcast channel. If the amount of information of the to-be-sent information is small, the first communication apparatus may send the broadcast information instead of sending the extended broadcast information, to reduce difficulty of integrating information at a receive end. For another example, if there are a plurality of pieces of to-be-sent information, the first communication apparatus may send the plurality of pieces of to-be-sent information by using a plurality of pieces of broadcast information, and the plurality of pieces of to-be-sent information all include some same content, the first communication apparatus may send the some same content by using the extended broadcast information, and send remaining plurality of pieces of to-be-sent information by using the plurality of pieces of broadcast information. In this way, the amount of information carried on the broadcast channel can be reduced, and repeated sending of redundant information can be reduced.
4. A transmission resource of the extended broadcast information is indicated by the broadcast information.

A purpose of sending the extended broadcast message is to send, on the data channel instead of the broadcast channel, a part of information (related information used for discovery, connection, non-public data transfer, or public data transfer) that needs to be broadcast, to reduce the amount of information carried on the broadcast channel and reduce the congestion degree of the broadcast channel. Because there is a corresponding relationship between the broadcast information and the extended broadcast information, if the extended broadcast information is sent on the data channel, the broadcast information sent on the broadcast channel may further indicate a resource used to transmit the extended broadcast information on the data channel, so that the receive end can correctly receive the extended broadcast information.

The broadcast information may indicate a broadcast type, and the broadcast type includes whether connection can be performed and/or whether discovery can be performed.

If the broadcast type indicates that connection can be performed, the communication apparatus (for example, the second communication apparatus) receiving the broadcast information may establish, based on the broadcast information or the extended broadcast information indicated by the broadcast information, a connection to the communication apparatus (for example, the first communication apparatus) sending the broadcast information. The communication apparatus sending the broadcast information receives (or detects) a connection request in a first time resource window corresponding to (a corresponding manner is that the communication apparatus sending the broadcast information explicitly indicates the first time resource window, or the communication apparatus sending the broadcast information sends resource information occupied by the first time resource window, to implicitly indicate the first time resource window) the broadcast information or the extended broadcast information indicated by the broadcast information. The communication apparatus (for example, the second communication apparatus) that receives the broadcast information and expects to connect to the communication apparatus sending the broadcast information may send a connection request in the first time resource window, to implement a communication connection between the two communication apparatuses. Certainly, the two communication apparatuses may establish a communication connection through one time of interaction, or may establish a communication connection through a plurality of times of interaction.

If the broadcast type indicates that connection cannot be performed, the communication apparatus (for example, the second communication apparatus) receiving the broadcast information may not establish, based on the broadcast information or the extended broadcast information indicated by the broadcast information, a connection to the communication apparatus (for example, the first communication apparatus) sending the broadcast information. The communication apparatus sending the broadcast information does not receive the connection request in the first time resource window corresponding to the broadcast information or the extended broadcast information indicated by the broadcast information, or the first time resource window does not exist (that is, is undefined). Further, the communication apparatus receiving the broadcast information may not send the connection request based on the broadcast information or the extended broadcast information indicated by the broadcast information.

If the broadcast type indicates that discovery can be performed, the communication apparatus (for example, the second communication apparatus) receiving the broadcast information may be discovered, based on the broadcast information or the extended broadcast information indicated by the broadcast information, by the communication apparatus (for example, the first communication apparatus) sending the broadcast information. The communication apparatus sending the broadcast information receives (or detects) a discovery request in a second time resource window corresponding to the broadcast information or the extended broadcast information indicated by the broadcast information (for a corresponding manner, refer to the corresponding manner of the first time resource window described above). The communication apparatus (for example, the second communication apparatus) that receives the broadcast information and expects to be discovered by the communication apparatus sending the broadcast information may send a discovery request in the first time resource window, to be discovered by the communication apparatus sending the broadcast information. Because it may be considered that the communication apparatus receiving the broadcast information has discovered the communication apparatus sending the broadcast information, it may be considered that bidirectional discovery is implemented when the communication apparatus receiving the broadcast information is further discovered by the communication apparatus sending the broadcast information. Certainly, the two communication apparatuses may complete a discovery process through one time of interaction, or may complete the discovery process through a plurality of times of interaction.

If the broadcast type indicates that discovery cannot be performed, the communication apparatus (for example, the second communication apparatus) receiving the broadcast information may not be discovered, based on the broadcast information or the extended broadcast information indicated by the broadcast information, by the communication apparatus (for example, the first communication apparatus) sending the broadcast information. The communication apparatus sending the broadcast information does not receive (or does not detect) the connection request in the second time resource window corresponding to the broadcast information or the extended broadcast information indicated by the broadcast information, or the second time resource window does not exist (that is, is undefined). Further, the communication apparatus receiving the broadcast information may not send the discovery request based on the broadcast information or the extended broadcast information indicated by the broadcast information.

The first time resource window and the second time window may be different time resource windows that partially overlap or have no overlapping area, or may be a same time resource window.

It can be learned from the foregoing descriptions that a device receiving the broadcast information may determine an optional signaling sending behavior based on the broadcast type indicated by the broadcast information, to avoid unnecessary signaling sending, to reduce overheads and reduce power consumption.

Certainly, in addition to indicating the broadcast type, the broadcast information may further indicate other information, or the broadcast type may further include other content in addition to the foregoing content. This is not limited in this embodiment of this application.

S202: The first communication apparatus sends the broadcast information on at least one broadcast channel on a predefined frequency band. Correspondingly, one or more communication apparatuses operating on the predefined frequency band may perform detection on the at least one broadcast channel, to receive the broadcast information. In FIG. 2, an example in which the second communication apparatus receives the broadcast information is used. In actual application, one or more communication apparatuses may all receive the broadcast information, and the second communication apparatus is any one of these communication apparatuses.

The predefined frequency band is, for example, an unlicensed frequency band. For example, a range of the predefined frequency band includes 2400 MHz to 2483.5 MHz. Alternatively, if the unlicensed frequency band further includes another frequency, the range of the predefined frequency band may also be correspondingly changed. Optionally, the predefined frequency band may be continuous or discontinuous in frequency domain. One or more broadcast channels may be deployed on the predefined frequency band. For example, the at least one broadcast channel is all or a part of broadcast channels deployed on the predefined frequency band. For example, the at least one broadcast channel includes a first broadcast channel, and a center frequency of the first broadcast channel is, for example, any one of 2403 MHz, 2404 MHz, 2420 MHz, 2421 MHz, 2422 MHz, 2423 MHz, 2424 MHz, or 2481 MHz. 2403 MHz, 2404 MHz, and 2481 MHz may be considered to be located in an edge area of the predefined frequency band, a Wi-Fi channel does not cover these frequencies, and a congested broadcast channel in the Bluetooth technology does not use these frequencies. However, a general channel (a data channel) in the Bluetooth technology is generally idle. Therefore, although data channels in the Bluetooth technology cover these frequencies (except 2481 MHz), interference is small. For the frequency 2481 MHz, both the Wi-Fi channel and the channel in the Bluetooth technology are not covered. It can be learned that in this embodiment of this application, interference between channels of different communication technologies can be reduced by using these frequencies. Although the frequencies 2420 MHz to 2424 MHz are not located at the edge of the predefined frequency band, the channel in the Bluetooth technology does not cover these frequencies. Although a Wi-Fi channel 2, a Wi-Fi channel 3, or a Wi-Fi channel 4 may cover a part of or all of these frequencies, the Wi-Fi channel 2, the Wi-Fi channel 3, and the Wi-Fi channel 4 are channels with low utilization and are generally seldom used. Therefore, a center frequency of the broadcast channel is deployed as one of these frequencies, and relatively, interference is small, or a probability of causing interference is small.

A quantity of the at least one broadcast channel may be greater than or equal to 1. If the quantity of the at least one broadcast channel is equal to 1, the broadcast channel is the first broadcast channel. If the quantity of the at least one broadcast channel is greater than 1, it indicates that the at least one broadcast channel may include another broadcast channel in addition to including the first broadcast channel. If the quantity of the at least one broadcast channel is greater than 1, a center frequency of each broadcast channel in the plurality of broadcast channels may be one of 2403 MHz, 2404 MHz, 2420 MHz, 2421 MHz, 2422 MHz, 2423 MHz, 2424 MHz, or 2481 MHz. Center frequencies of different broadcast channels are different. For example, the at least one broadcast channel further includes a second broadcast channel, a center frequency of the second broadcast channel is one of 2403 MHz, 2404 MHz, 2420 MHz, 2421 MHz, 2422 MHz, 2423 MHz, 2424 MHz, or 2481 MHz, and the center frequency of the first broadcast channel is different from the center frequency of the second broadcast channel.

Alternatively, if the quantity of the at least one broadcast channel is greater than 1, the center frequency of the first broadcast channel in the at least one broadcast channel is one of 2403 MHz, 2404 MHz, 2420 MHz, 2421 MHz, 2422 MHz, 2423 MHz, 2424 MHz, or 2481 MHz, and a center frequency of another broadcast channel in the at least one broadcast channel may not be limited to one of these frequencies. For example, the center frequency of the another broadcast channel is a frequency other than these frequencies on the predefined frequency band.

In an optional implementation, the center frequency of the first broadcast channel may belong to a first set. In other words, center frequencies of one or more broadcast channels in the at least one broadcast channel belong to the first set. Optionally, the first set may be a set of center frequencies that are predefined (for example, specified according to a protocol or a regulation), preconfigured, or pre-negotiated. The first set includes one or more of the following: at least one of 2403 MHz or 2404 MHz, at least one of 2420 MHz, 2421 MHz, 2422 MHz, 2423 MHz, or 2424 MHz, or 2481 MHz. It may alternatively be understood that the frequencies such as 2403 MHz, 2404 MHz, 2420 MHz, 2421 MHz, 2422 MHz, 2423 MHz, 2424 MHz, and 2481 MHz are divided into three parts based on frequency domain locations. 2403 MHz and/or 2404 MHz belong/belongs to a first part, at least one of 2420 MHz, 2421 MHz, 2422 MHz, 2423 MHz, or 2424 MHz belongs to a second part, and 2481 MHz belongs to a third part.

For example, the first set includes 2403 MHz, 2404 MHz, 2420 MHz, 2421 MHz, 2422 MHz, 2423 MHz, 2424 MHz, and 2481 MHz. In this case, the first set includes a large quantity of frequencies, and a selection range of the center frequency of the broadcast channel may be expanded. For another example, the first set includes 2403 MHz, 2422 MHz, and 2481 MHz. For another example, the first set includes 2404 MHz, 2422 MHz, and 2481 MHz. In the two cases, a frequency interval between frequencies included in the first set is large in frequency domain, and the center frequency of the broadcast channel is selected in such a first set, so that a frequency domain diversity gain between selected broadcast channels is large. In addition, independence of a broadcast channel determined in this way is strong, and a probability that different broadcast channels are simultaneously interfered with is low. Certainly, these several cases are merely examples, and a quantity, a value, or the like of frequencies included in the first set is not limited thereto.

If center frequencies of two broadcast channels need to be selected, two frequencies may be respectively selected from any two of the three parts as the center frequencies of the two broadcast channels. Because a distance between any two of the three parts is long in frequency domain, different broadcast channels selected in this manner can implement an effect of frequency domain diversity. In addition, independence of a broadcast channel determined in this way is strong, and a probability that different broadcast channels are simultaneously interfered with is low. In addition, because a frequency domain interval between different broadcast channels selected in this manner is large, frequency selective fading features of the different broadcast channels are independent, and a probability that the different broadcast channels are simultaneously located in a frequency deep fading region is low, so that transmission quality of the broadcast information can be improved. In addition, because the frequency domain interval between different broadcast channels selected in this manner is large, interference caused by frequency leakage between the different broadcast channels is also small.

For example, the at least one broadcast channel includes the first broadcast channel and the second broadcast channel, and the center frequency of the first broadcast channel belongs to the first set. For example, the center frequency of the first broadcast channel is 2403 MHz. The center frequency of the second broadcast channel also belongs to the first set, and the center frequency of the first broadcast channel is different from the center frequency of the second broadcast channel. For example, the center frequency of the second broadcast channel is 2422 MHz. It can be learned that, because of a composition manner of the first set, a frequency domain distance between center frequencies of different broadcast channels selected in the first set is long, so that interference can be effectively reduced.

The predefined frequency band may include at least one available center frequency, and the at least one available center frequency is a center frequency that can be used for the broadcast channel and/or the data channel. For example, the center frequency of the at least one broadcast channel belongs to the at least one available center frequency. It can be learned from the foregoing descriptions that the data channel is a channel shared by various types of information other than the broadcast information. The various types of information described herein includes, for example, one or more of data, control signaling, or the extended broadcast information, and may further include other information except the broadcast information. Therefore, an available center frequency may alternatively be understood as a center frequency of a channel that can carry first information. The first information includes the broadcast information and/or second information. The second information includes one or more of data, control signaling, or extended broadcast information, and may further include other information in addition to the broadcast information. In the at least one center frequency, a center frequency with a lowest frequency is, for example, 2403 MHz or 2404 MHz, and a center frequency with a highest frequency is, for example, 2481 MHz. That is, the center frequency of the broadcast channel specifies a frequency range for the at least one available center frequency, and another center frequency in the at least one available center frequency needs to be within the range.

The center frequency of the broadcast channel is used to specify the frequency range for the at least one available center frequency, so that a frequency domain interval between broadcast channels is as large as possible, and a diversity effect between the broadcast channels is better. Because the center frequency of the broadcast channel may be located at the edge of the predefined frequency band, these broadcast channels are interfered with only by a data channel from one side. Compared with a case in which the broadcast channels are interfered with by data channels from two sides, in this embodiment of this application, the broadcast channels are less interfered with by the data channel in this deployment. In addition, to reduce interference from the data channel to the broadcast channel, a frequency domain interval between the data channels may be greater than a frequency domain interval between the data channel and the broadcast channel, and the broadcast channel of which center frequency is located at the edge of the predefined frequency band only needs to reserve the foregoing larger frequency domain interval on one side, so that overheads caused by the foregoing frequency domain interval are less.

In the predefined frequency band, only the broadcast channel may be deployed, or in addition to the broadcast channel, another channel may be deployed, for example, the data channel may be deployed. Therefore, there is a corresponding interval between center frequencies of two data channels that are adjacent, and the data channel may also be adjacent to the broadcast channel. In this case, there is also a corresponding interval between center frequencies of a data channel and a broadcast channel that are adjacent. Adjacency herein is adjacency in frequency domain. For example, if a center frequency of a broadcast channel is 2422 MHz, a center frequency of a data channel is 2480 MHz, and there is no other channel between the two channels, it is considered that the broadcast channel and the data channel are adjacent in frequency domain. The adjacency of the data channel is also understood in a similar manner. For example, a plurality of data channels may be deployed on the predefined frequency band, and adjacent data channels in frequency domain may be at an equal interval. For example, the predefined frequency band includes a data channel 1, a data channel 2, and a data channel 3. The data channel 1 and the data channel 2 are adjacent in frequency domain, and the data channel 2 and the data channel 3 are adjacent in frequency domain. In this case, a frequency domain distance between the data channel 1 and the data channel 2 may be equal to a frequency domain distance between the data channel 2 and the data channel 3. A bandwidth of the data channel is considered, to reduce interference between the data channel and the broadcast channel, a frequency domain distance between the center frequency of the data channel and the center frequency of the broadcast channel may be set based on a maximum bandwidth of the data channel. For example, a frequency domain distance between center frequencies of the data channel and the broadcast channel that are adjacent in frequency domain may be greater than or equal to the maximum bandwidth of the data channel. However, the data channel may not be set to the maximum bandwidth. For example, the maximum bandwidth of the data channel is 4 MHz, and the bandwidth of the data channel may be set to 4 MHz, or may be set to less than 4 MHz, for example, may be set to 1 MHz or 2 MHz. Therefore, a frequency domain distance between two data channels that are adjacent in frequency domain is not necessarily considered based on the maximum bandwidth of the data channel. For example, the frequency domain distance between center frequencies of two data channels that are adjacent in frequency domain may be less than or equal to the maximum bandwidth of the data channel. Therefore, the frequency domain distance between center frequencies of the data channel and the broadcast channel that are adjacent in frequency domain may be greater than or equal to the frequency domain distance between center frequencies of two data channels that are adjacent in frequency domain. This may alternatively be understood as follows: The at least one available center frequency does not include a center frequency of which interval between the center frequency and the center frequency of the broadcast channel is less than a first threshold. In other words, the frequency domain distance between center frequencies of the broadcast channel and the data channel that are adjacent in frequency domain needs to be greater than or equal to the first threshold. The first threshold is, for example, the maximum bandwidth of the data channel, for example, 4 MHz, or may be another value.

For example, the center frequency of the first broadcast channel is 2422 MHz. If a data channel is adjacent to the first broadcast channel in frequency domain, a frequency domain distance between a center frequency of the data channel and the center frequency of the first broadcast channel needs to be greater than or equal to the first threshold. For example, if the first threshold is 4 MHz, the center frequency of the data channel may be less than or equal to 2408 MHz, or greater than or equal to 2426 MHz. In this manner, interference between the data channel and the broadcast channel can be reduced.

A symbol rate of each broadcast channel of a part or all of broadcast channels in the at least one broadcast channel is, for example, 1 MHz or 500 kHz, or may be another value. For example, a symbol rate of the first broadcast channel is 1 MHz or 500 kHz. A unit of the symbol rate may be Hz, or may be symbol (symbol) per second. For example, 1 MHz may alternatively be described as 1M symbols per second, and 500 kHz may alternatively be described as 500K symbols per second. The symbol rate may alternatively be understood as a bandwidth. In this embodiment of this application, for example, a symbol rate of the broadcast channel is a divisor of 1 MHz, and is less than or equal to 1 MHz. For example, the symbol rate of the broadcast channel is 1 MHz, 500 kHz, 250 kHz, 125 kHz, 200 kHz, 100 kHz, or the like. In this embodiment of this application, the symbol rate of the broadcast channel is low, so that deployment of the broadcast channel is more flexible. In addition, a lower symbol rate enables each symbol to have longer transmission time period. Therefore, at a same transmit power, each symbol has greater transmit energy, and a coverage capability of the broadcast channel is stronger.

For the transmit end (for example, the first communication apparatus) of the broadcast information, the broadcast information may be sent on the at least one broadcast channel. For the receive end (for example, the second communication apparatus) of the broadcast information, the center frequency of the at least one broadcast channel may be learned in advance. However, the second communication apparatus may not know, on which broadcast channels in the at least one broadcast channel, the first communication apparatus may send the broadcast information. Therefore, the second communication apparatus may detect all the at least one broadcast channel. For example, the second communication apparatus first performs blind detection on any broadcast channel in the at least one broadcast channel, and after detection on the broadcast channel is completed, may continue to perform blind detection on another broadcast channel in the at least one broadcast channel, and so on, until all the at least one broadcast channel is detected. A result of detecting any broadcast channel by the second communication apparatus may be that the broadcast information is detected, or may be that no broadcast information is detected. For example, if the first communication apparatus sends the broadcast information on the first broadcast channel, the second communication apparatus may receive the broadcast information from the first communication apparatus through detection on the first broadcast channel. For example, if the first communication apparatus does not send the broadcast information on the second broadcast channel, a result of detecting the second broadcast channel by the second communication apparatus is that no broadcast information is detected.

S203: The second communication apparatus sends response information to the first communication apparatus, and correspondingly, the first communication apparatus receives the response information from the second communication apparatus. The response information is a response to the broadcast information. Alternatively, after receiving the broadcast information, the second communication apparatus may not need to send the response information. For example, after receiving the broadcast information, the second communication apparatus does not perform any operation. Therefore, S203 is an optional step, and the step is indicated by a dashed line in FIG. 2.

For example, the broadcast information indicates that connection may be performed. If the second communication apparatus expects to establish a communication connection to the first communication apparatus, the response information is, for example, a connection request sent by the second communication apparatus to the first communication apparatus, or the response information is included in the connection request. For another example, the broadcast information indicates that discovery may be performed. If the second communication apparatus expects to be discovered by the first communication apparatus, the response information is, for example, a discovery request sent by the second communication apparatus to the first communication apparatus, or the response information is included in the discovery request. If the broadcast information indicates other content, the response information may alternatively be implemented in another manner.

In this embodiment of this application, the broadcast channel may be deployed on the predefined frequency band, and the center frequency of the deployed broadcast channel is 2403 MHz, 2404 MHz, 2420 MHz, 2421 MHz, 2422 MHz, 2423 MHz, 2424 MHz, or 2481 MHz. Relatively, interference of these frequencies is low, to help improve the transmission quality of broadcast information.

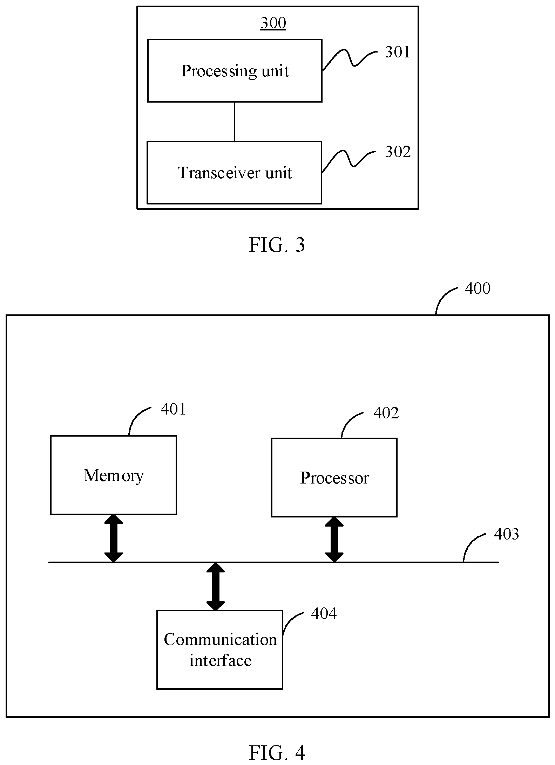

The foregoing describes the method provided in embodiments of this application. The following describes a communication apparatus provided in embodiments of this application with reference to FIG. 3 and FIG. 4. It should be understood that descriptions of the following apparatus embodiment correspond to descriptions of the method embodiment. Therefore, for content that is not described in detail, refer to each other.

FIG. 3 is a schematic block diagram of an apparatus 300 according to an embodiment of this application. The apparatus 300 is configured to implement a function of the first communication apparatus or the second communication apparatus in the foregoing method embodiments. For example, the apparatus 300 may be a software module or a chip system. The chip system may include a chip, or may include a chip and another discrete device. The apparatus 300 includes a processing unit 301 and a transceiver unit 302. The transceiver unit 302 is configured to communicate with another device. The transceiver unit 302 may also be referred to as a communication interface, a communication unit, an input/output interface, or the like.

In some embodiments, the apparatus 300 is configured to implement a function of the first communication apparatus in the foregoing method embodiment. The apparatus 300 may be the first communication apparatus, or a chip, a circuit, or the like configured in the first communication apparatus. The processing unit 301 is configured to perform processing-related operations of the first communication apparatus in the foregoing method embodiment, and the transceiver unit 302 is configured to perform receiving/sending-related operations of the first communication apparatus in the foregoing method embodiment.

In some other embodiments, the apparatus 300 is configured to implement a function of the second communication apparatus in the foregoing method embodiment. The apparatus 300 may be the second communication apparatus, or a chip, a circuit, or the like configured in the second communication apparatus. The processing unit 301 is configured to perform processing-related operations of the second communication apparatus in the foregoing method embodiment, and the transceiver unit 302 is configured to perform receiving/sending-related operations of the second communication apparatus in the foregoing method embodiment.

In this embodiment of this application, division into the functional units is an example, and is merely a logical function division. During actual implementation, another division manner may be used. In addition, the functional units in this embodiment of this application may be integrated into one processor, or each of the units may exist alone physically, or two or more units are integrated into one unit. The integrated unit may be implemented in a form of hardware, or may be implemented in a form of a software functional unit.

FIG. 4 is a schematic diagram of an apparatus 400 according to an embodiment of this application. The apparatus 400 is, for example, a communication apparatus, or includes one or more components in the communication apparatus, for example, a chip or an integrated circuit. The apparatus 400 may include at least one processor 402 and a communication interface 404. Further, optionally, the apparatus 400 may further include at least one memory 401. Optionally, the apparatus 400 may further include a bus 403. The memory 401, the processor 402, and the communication interface 404 are connected by using the bus 403.

The memory 401 is configured to provide storage space, and the storage space may store data such as an operating system and a computer program. The memory 401 may be one or a combination of a random access memory (random access memory, RAM), a read-only memory (read-only memory, ROM), an erasable programmable read-only memory (erasable programmable read-only memory, EPROM), a portable read-only memory (portable read-only memory), or the like.

The processor 402 is a module for performing an arithmetic operation and/or a logical operation, and may be specifically one or a combination of a plurality of processing modules such as a central processing unit (central processing unit, CPU), a graphics processing unit (graphics processing unit, GPU), a microprocessor (microprocessor unit, MPU), an application-specific integrated circuit (application-specific integrated circuit, ASIC), a field programmable gate array (field programmable gate array, FPGA), a complex programmable logic device (complex programmable logic device, CPLD), a synergistic processing unit (assisting the central processing unit to complete corresponding processing and application), and a microcontrol unit (microcontroller unit, MCU).

The communication interface 404 may be configured to provide an information input or output for the at least one processor 402. And/or the communication interface may be configured to receive data sent from the outside and/or send data to the outside, and may be a wired link interface including an Ethernet cable or the like, or may be a wireless link (Wi-Fi, Bluetooth, universal wireless transmission, a vehicle-mounted short-range communication technology, or the like) interface. Optionally, the communication interface 404 may further include a transmitter (for example, a radio frequency transmitter or an antenna), a receiver, or the like coupled to the interface.

In some embodiments, the apparatus 400 may be the first communication apparatus in the foregoing method embodiments or a component in the first communication apparatus, for example, a chip or an integrated circuit. The processor 402 in the apparatus 400 is configured to read the computer program stored in the memory 401, to control the first communication apparatus to perform a corresponding operation. For specific details, refer to the descriptions in the foregoing method embodiments, and details are not described again.

In some other embodiments, the apparatus 400 may be the second communication apparatus in the foregoing method embodiments or a component in the second communication apparatus, for example, a chip or an integrated circuit. The processor 402 in the apparatus 400 is configured to read the computer program stored in the memory 401, to control the second communication apparatus to perform a corresponding operation. For specific details, refer to the descriptions in the foregoing method embodiments, and details are not described again.

An embodiment of this application further provides a terminal device. The terminal device is, for example, an intelligent cockpit device, a smart home device, an intelligent manufacturing device, or a vehicle. The terminal device includes a first communication apparatus and/or a second communication apparatus. The first communication apparatus and the second communication apparatus may respectively be the first communication apparatus and the second communication apparatus in the embodiment shown in FIG. 2. A type of the first communication apparatus and a type of the second communication apparatus may be the same or different. For example, in some embodiments, the type of the first communication apparatus is different from the type of the second communication apparatus. For example, the first communication apparatus is one or more of modules such as a camera, a screen, a microphone, a speaker, a radar, an electronic key, a passive entry passive start system controller, or UE. The second communication apparatus is, for example, a base station or a CDC. Alternatively, in some embodiments, if the type of the first communication apparatus is the same as the type of the second communication apparatus, the first communication apparatus and the second communication apparatus each may be a base station, a CDC, or the like. Alternatively, the first communication apparatus and the second communication apparatus each may be one or more of modules such as a camera, a screen, a microphone, a speaker, a radar, an electronic key, a passive entry passive start system controller, or UE. Optionally, the terminal device may be an unmanned aerial vehicle, a robot, a device in a smart home scenario, a device in an intelligent manufacturing scenario, or the like.

Further, an embodiment of this application further provides an apparatus, including functional units configured to implement the method provided in the embodiment shown in FIG. 2. Alternatively, the apparatus includes a processor and an interface circuit. The processor is configured to communicate with another apparatus through the interface circuit, and perform the method in the foregoing method embodiment. Alternatively, the apparatus includes a processor, configured to invoke a program stored in a memory, to perform the method described in the embodiment shown in FIG. 2.

An embodiment of this application further provides a computer-readable storage medium, including instructions. When the instructions are run on a computer, the computer is enabled to perform the method described in the embodiment shown in FIG. 2.

An embodiment of this application further provides a chip system. The chip system includes at least one processor and interface circuit. Further, optionally, the chip system may further include a memory or an external memory. The processor is configured to execute instructions and/or data interaction through the interface circuit, to implement the method in the foregoing method embodiment. The chip system may include a chip, or may include a chip and another discrete device.

An embodiment of this application further provides a computer program product, including instructions. When the instructions are run on a computer, the computer is enabled to perform the method described in the embodiment shown in FIG. 2.

In embodiments of this application, the processor may be a general-purpose processor, a digital signal processor, an application-specific integrated circuit, a field programmable gate array or another programmable logic device, a discrete gate or transistor logic device, a discrete hardware component, or a synergistic processing unit and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a nonvolatile memory, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

All or some of the methods in embodiments of this application may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, comprising:
generating broadcast information; and
sending the broadcast information on at least one broadcast channel on a predefined frequency band, wherein the at least one broadcast channel comprises a first broadcast channel, and a center frequency of the first broadcast channel is 2403 MHz, 2404 MHz, 2420 MHz, 2421 MHz, 2422 MHz, 2423 MHz, 2424 MHz, or 2481 MHz.

2. The method according to claim 1, wherein the center frequency of the first broadcast channel belongs to a first set, and the first set comprises one or more of the following:
at least one of 2403 MHz or 2404 MHz;
at least one of 2420 MHz, 2421 MHz, 2422 MHz, 2423 MHz, or 2424 MHz; or
2481 MHz.

3. The method according to claim 2, wherein the at least one broadcast channel further comprises a second broadcast channel, a center frequency of the second broadcast channel belongs to the first set, and the center frequency of the second broadcast channel is different from the center frequency of the first broadcast channel.

4. The method according to any one of claims 1 to 3, wherein the predefined frequency band comprises at least one available center frequency, a center frequency with a lowest frequency in the at least one available center frequency is 2403 MHz or 2404 MHz, a center frequency with a highest frequency in the at least one available center frequency is 2481 MHz, and the at least one available center frequency is a center frequency of a broadcast channel and/or a data channel.

5. The method according to any one of claims 1 to 4, wherein on the predefined frequency band, a frequency interval between center frequencies of two data channels that are adjacent in frequency is less than or equal to a frequency interval between center frequencies of a data channel and a broadcast channel that are adjacent in frequency.

6. The method according to any one of claims 1 to 5, wherein a symbol rate of the first broadcast channel is a divisor of 1 MHz.

7. The method according to claim 6, wherein the symbol rate of the first broadcast channel is 1 MHz, 500 kHz, 250 kHz, 125 kHz, 200 kHz, or 100 kHz.

8. The method according to any one of claims 1 to 7, wherein the broadcast information indicates a status of a node sending the broadcast information.

9. A communication method, comprising:
performing detection on at least one broadcast channel on a predefined frequency band; and
receiving broadcast information on a first broadcast channel comprised in the at least one broadcast channel, wherein a center frequency of the first broadcast channel is 2403 MHz, 2404 MHz, 2420 MHz, 2421 MHz, 2422 MHz, 2423 MHz, 2424 MHz, or 2481 MHz.

10. The method according to claim 9, wherein the center frequency of the first broadcast channel belongs to a first set, and the first set comprises one or more of the following:
at least one of 2403 MHz or 2404 MHz;
at least one of 2420 MHz, 2421 MHz, 2422 MHz, 2423 MHz, or 2424 MHz; or
2481 MHz.

11. The method according to claim 10, wherein the at least one broadcast channel further comprises a second broadcast channel, a center frequency of the second broadcast channel belongs to the first set, and the center frequency of the second broadcast channel is different from the center frequency of the first broadcast channel.

12. The method according to any one of claims 9 to 11, wherein the predefined frequency band comprises at least one available center frequency, a center frequency with a lowest frequency in the at least one available center frequency is 2403 MHz or 2404 MHz, a center frequency with a highest frequency in the at least one available center frequency is 2481 MHz, and the at least one available center frequency is a center frequency of a broadcast channel and/or a data channel.

13. The method according to any one of claims 9 to 12, wherein on the predefined frequency band, a frequency interval between center frequencies of two data channels that are adjacent in frequency is less than or equal to a frequency interval between center frequencies of a data channel and a broadcast channel that are adjacent in frequency.

14. The method according to any one of claims 9 to 13, wherein a symbol rate of the first broadcast channel is a divisor of 1 MHz.

15. The method according to claim 14, wherein the symbol rate of the first broadcast channel is 1 MHz, 500 kHz, 250 kHz, 125 kHz, 200 kHz, or 100 kHz.

16. The method according to any one of claims 9 to 15, wherein the broadcast information indicates a status of a node sending the broadcast information.

17. A communication apparatus, comprising a unit configured to implement the method according to any one of claims 1 to 8, or comprising a unit configured to implement the method according to any one of claims 9 to 16.

18. A chip system, comprising at least one processor and an interface circuit, wherein the processor is configured to execute instructions and/or data interaction through the interface circuit, so that the chip system performs the method according to any one of claims 1 to 8, or the chip system performs the method according to any one of claims 9 to 16.

19. A terminal device, comprising the communication apparatus according to claim 17 or the chip system according to claim 18.

20. A computer-readable storage medium, wherein the computer-readable storage medium stores instructions, and when the instructions are run on a computer, the computer is enabled to perform the method according to any one of claims 1 to 8, or the computer is enabled to perform the method according to any one of claims 9 to 16.
